# EUROPEAN PATENT APPLICATION

(11) **EP 4 617 250 A1**
(43) Date of publication of application: **17.09.2025**
(21) Application number: 24201456.1
(22) Date of filing: 19.09.2024
(51) Int. Cl.: C04B 35/573, B28B 7/34, C04B 38/00, C04B 38/06

(54) **SILICON CONSUMABLE CORE FOR INTERNAL FEATURES IN REACTION BONDED CERAMICS**

(30) Priority: 13.03.2024 US 202418603606
(71) Applicant: II-VI Delaware, Inc., Wilmington, DE 19890 (US)
(72) Inventor: MARSHALL, Andrew, Wilmington, 19890 (US); COPPOLA, Jonathan, Wilmington, 19890 (US); AGHAJANIAN, Michael, Wilmington, 19890 (US); HEULITT IV, Charles Addison, Wilmington, 19890 (US)
(74) Representative: Schmidt, Christian

(57) **Abstract**

A method of making reaction bonded ceramic components having one or more internal features comprising:

producing a Si consumable core shape representative of the features to be formed;

assembling the mold maintaining the location of the Si consumable core;

casting a preform slurry around the Si consumable core to create a preform piece;

and reaction bonding said preform piece to yield said ceramic components having internal features.

## Description

### CROSS-REFERENCE TO RELATED APPLICATIONS/INCORPORATION BY REFERENCE

N/A

### FIELD

Aspects of the present disclosure relate to ceramic components for the semiconductor industry. More specifically, certain embodiments of the disclosure relate to reaction bonded ceramic components that contain internal features (e.g., channels).

### BACKGROUND

Conventional approaches for making ceramic components for the semiconductor industry may have issues, especially when including internal features, such as channels.

Further limitations and disadvantages of conventional and traditional approaches will become apparent to one of skill in the art, through comparison of such systems with some aspects of the present disclosure as set forth in the remainder of the present application with reference to the drawings.

### BRIEF SUMMARY

A system and/or method for making ceramic components for the semiconductor industry, substantially as shown in and/or described in connection with at least one of the figures, as set forth more completely in the claims.

These and other advantages, aspects and novel features of the present disclosure, as well as details of an illustrated embodiment thereof, will be more fully understood from the following description and drawings.

### BRIEF DESCRIPTION OF SEVERAL VIEWS OF THE DRAWINGS

FIG. 1 is a diagram of reaction bonded silicon carbide, in accordance with an example embodiment of the disclosure.
FIG. 2 shows exemplary preforms bonded with SiC-based glue, in accordance with an example embodiment of the disclosure.
FIG. 3 illustrates a cross-section of reaction bonded silicon carbide (RB-SiC) flow-through part made by bonding two preform halves with SiC-based glue and then reaction bonding, in accordance with an example embodiment of the disclosure.
FIG. 4 is a table showing the characteristics of silicon versus silicon carbide, in accordance with an example embodiment of the disclosure.
FIG. 5 illustrates steps of using the silicon consumable core at the interface of preformed sections to create components that have internal channels, in accordance with an example embodiment of the disclosure.
FIG. 6 shows the structure of a reaction bonded silicon carbide (RB-SiC) ceramic component, in accordance with an example embodiment of the disclosure.

### DETAILED DESCRIPTION

Reaction bonded ceramic components containing internal features are important to the semiconductor industry. Example components include, but are not limited to, water-cooled wafer tables, water-cooled collector mirrors and water-cooled high energy laser mirrors. Conventional parts may be made by forming preform pieces/portions (e.g., two preform halves) with surface features (e.g., channels), bonding the preform pieces with a silicon carbide (SiC)-based glue or adhesive (a caulk-like material) and thermal processing (such as, e.g., ceramic firing, reaction bonding, etc.) to yield a one-piece ceramic body finished component with internal features.

During conventional preform bonding operations as described above, a slight bead of excess SiC-based glue may extrude into the feature, such as a channel in the finished component. If the channel or other feature size is large (5 to 10 mm), excess glue may not pose a problem. However, many next-generation designs have ultra-small feature sizes (e.g., < 1 mm; in some embodiments, 0.25-1.0 mm or 0.5-1.0 mm). A bead of excess glue may restrict flow or even clog features of this small size, making it difficult to produce parts with ultra-small features. Thus, an alternative bonding method is needed.

Reaction bonded pieces may be glass bonded to try to avoid the excess glue problem, but this type of bonding has poor corrosion resistance, poor thermal conductivity, poor electrical conductivity and/or poor elevated temperature strength. It is also subject to failure if any high-temperature, post-processing is required.

This disclosure presents a method of forming ceramic components without using adhesives such as caulk-like SiC-based glue; therefore, no bead is formed that can clog a small channel. Instead of pieces bonded together, the internally channeled reaction bonded ceramic is formed in a single piece, using a silicon consumable core, where the core is removed (i.e. consumed) during the process by melting or other means. In some embodiments, silicon in the shape of the internal features (e.g., channels) is used within a preform and then heat treated; during this heat treatment the Si melts and also infiltrates into the preform thereby leaving open channels.

In the disclosed method, there is no bonding, and thus no bond line is formed. Benefits of this method of making may include (1) the ability to produce a channeled component that is free of a bond line; and/or (2) reduced fabrication labor. In some embodiments, the silicon consumable core has the majority (>50%) of the silicon melted away; in other embodiments, 75% or more, 85% or more, or 95% or more of the silicon is melted away.

The disclosed method uses no glue or adhesives and also avoids the issues presented with glass bonding or other bonding techniques.

The reaction bonded materials that are contemplated include, but are not limited to, silicon carbide (RB-SiC), boron carbide, diamond, pure carbon (as powder or fiber) and/or titanium diboride.

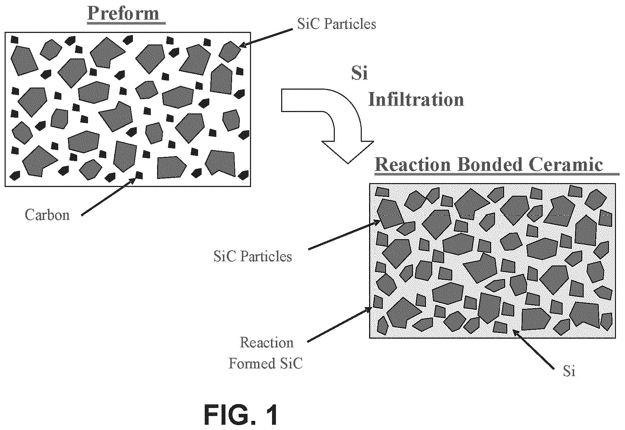

FIG. 1 is a diagram of reaction bonded silicon carbide (RB-SiC, also called SiSiC). Referring to Figure 1, reaction bonded SiC ceramics are produced by the reactive infiltration of molten Si into preforms of SiC + carbon. Upon infiltration, the molten Si reacts with the carbon to form additional SiC (Si + C → SiC), bonding the structure together. The final composite consists of the original SiC, reaction formed SiC and residual Si.

In the creation of reaction bonded ceramic components as described herein, preforms are utilized. A preform is created with a slurry which is formed into the desired shape, including both internal and external features. In some embodiments, the ceramic component is a reaction bonded silicon carbide (RB-SiC) created with a slurry comprising SiC + C based binder + Deionized H₂O. The preforms can be made as green parts that are then manipulated further to end up with a finished ceramic component. In some embodiments, an internal channel is present in the finished component.

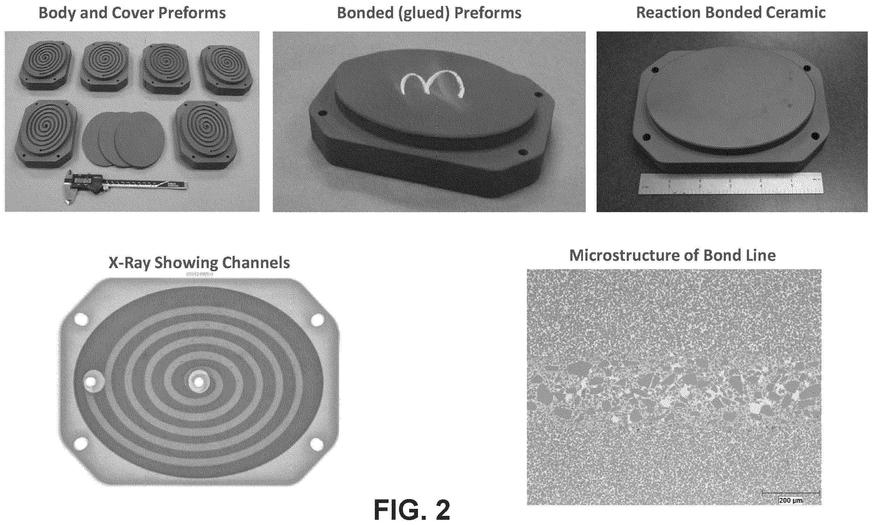

FIG. 2 shows exemplary preforms bonded with SiC-based glue (caulk-like mixture of SiC particles and carbon-based additives). Specifically, these preform assemblies have been reaction bonded to yield ceramic components with internal channels by first gluing the two portions of the component, then performing the reaction bonding process. In some embodiments, the preform comprises a body portion and a cover portion, as seen in Figure 2.

Also in Figure 2, the microstructure of the bond line after preforms bonded with SiC-based glue is shown. The microstructure depicts a fully dense bond line indicative of a hermetically sealed part. This allows for fluids to be used to control the temperature of the part during use in a vacuum environment.

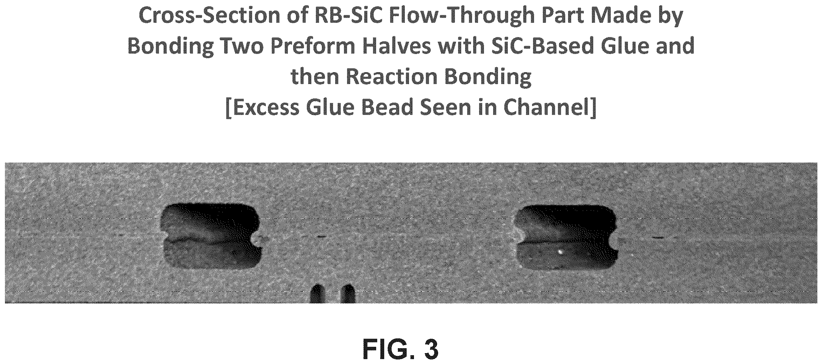

SiC-based glue for preform bonding may be formulated to have caulk-like consistency. This glue may comprise SiC powder, high carbon content organic liquid, and rheology modifier. In practice, more glue than is needed is applied to interface. This excess glue prevents any gaps in the bond line. However, the excess glue will extrude into the channel, forming a glue bead along the bottom, top and/or sidewall of the channel. This bead formed from the excess glue can affect flow characteristics, particularly in component designs with small channels (e.g., < 1 mm, see above). FIG. 3 illustrates a cross-section of RB-SiC flow-through part made by bonding two preform halves with SiC-based glue and then reaction bonding. In Figure 3, an excess glue bead can be seen in the channel.

Conventional reaction bonded SiC materials having internal features such as channels are often assembled as follows: (1) Preforms are bonded with SiC-based glue; and (2) The preform assembly is reaction bonded to yield a flow-through ceramic (i.e. material having internal channels). As discussed above, an issue with conventional methods is that excess glue forms a bead extruding into the channel.

The present invention forms features such as channels without using the caulk-like SiC-based glue; therefore, no bead is formed that can clog a small channel. The channels are instead formed by placing a Si consumable core in an appropriate mold and casting a preform slurry around the core. During reaction bonding the Si melts and infiltrates into the preform yielding a ceramic body with channels that reflect the shape of the consumable core.

The primary aim is to form features such as channels without a glue bead that enters the channel. Other benefits are (1) a continuous material, (2) extremely intricate and highly toleranced internal features in addition to channels can be formed and (3) custom internal feature roughness can be formed via replication from core (as the feature will take on the negative shape of the consumable material used to form it). In the present disclosure, methods are disclosed to create reaction bonded ceramic components (such as silicon carbide (RB-SiC)) containing one or more internal features such as channels that do not have excess material present in the feature. As such, the disclosed methods do not utilize a glue or adhesive. Instead, the method comprises using a silicon consumable core to create the feature. In the disclosed method, silicon in the shape of the internal features is used. This silicon (Si) is set into a mold in the desired layout/orientation, and a slurry is cast around the Si. In some embodiments, the slurry is SiC + carbon based binder + Deionized H₂O. After casting the material to make a preform, the preform is infiltrated with molten Si. In this step, the Si melts and also infiltrates into the preform leaving open channels. Because there is no "glue", there is no glue bead that enters the feature and thus the feature stays substantially clear of excess material (e.g. no excess silicon present in the feature). Varying the time and temperature can have different results.

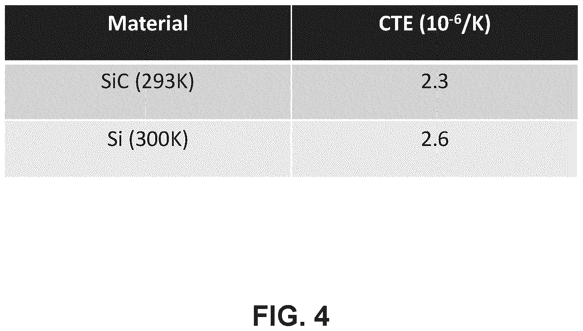

Silicon is well matched in Coefficient of Thermal Expansion (CTE) to SiC leading to a low stress process during the infiltration/melting of the consumable core (the part/preform remains intact in process). FIG. 4 is a table showing the CTE of silicon versus silicon carbide.

As discussed above, a silicon (Si) consumable core is set into a mold in the desired layout/orientation, and a slurry is cast around the Si. This creates a green part from the slurry which may be shaped in a mold. Then a drying/carbonization procedure takes place; this may occur under an inert atmosphere. In some embodiments, the temperature range for this step is from about 500°F to about 700°F. During the carbonization procedure the carbon based binder is broken down.

After the green part (green body) is created, the preform piece is treated by heating in the presence of silicon to make a finished ceramic component. Heat is applied until the melting temperature of silicon is reached (~1,410°C) or above. This step usually occurs in a vacuum furnace.

In some embodiments of the disclosed method, the following steps are included: producing a shape out of silicon representative of the features to be formed as a silicon consumable core; assembling a mold maintaining the location of the silicon consumable core; casting a preform slurry around the silicon consumable core; and reaction bonding, as described above, to yield a ceramic structure with internal features. The temperature and length of time for the reaction bonding step are both dependent of the geometry of the structure.

As discussed above, the disclosed method shows that custom internal feature roughness can be formed as the feature will take on the negative shape of the consumable material used to form it. In some embodiments, the Si consumable core shape is formed through laser machining. In other embodiments, traditional machining (e.g. milling), erosive processing (e.g. water jetting), additive processing (e.g. 3D printing), and casting (e.g. sand casting) are used for forming the shape of the Si consumable core.

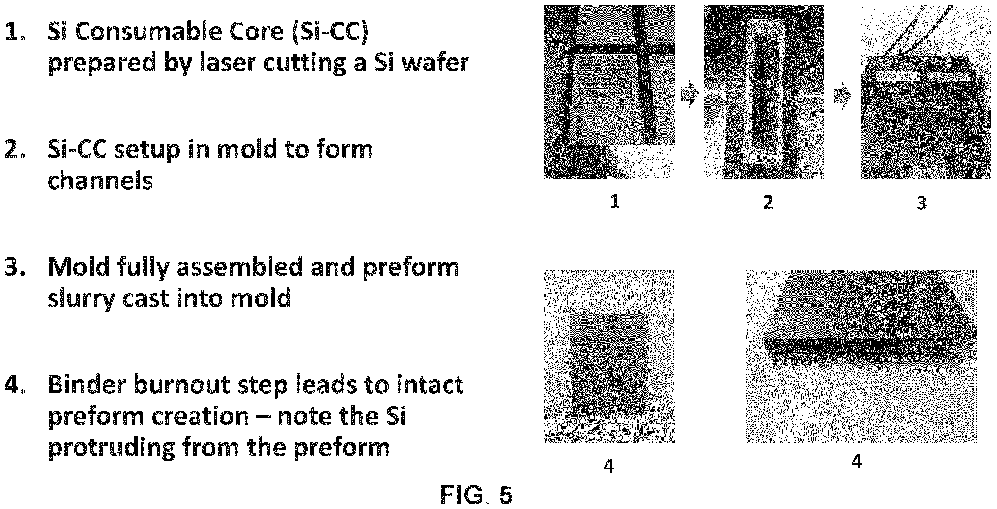

In an example of the disclosed method, a silicon consumable core is used at the interface of mold sections to create a component that has internal features such as channels. FIG. 5 illustrates a first part of the process where a Si consumable core (Si-CC) prepared by laser cutting a Si wafer (panel 1); the Si consumable core is setup in a mold in the location where the channels are desired (panel 2); the mold is completely assembled and the slurry is cast into the mold to form the preform piece (panel 3); the binder from the slurry is burned out to fully create the intact preform (panels 4). At this step, the silicon of the consumable core is protruding from the platform.

The silicon consumable core is removed (i.e. consumed) by infiltration becoming molten Si. In this process, the silicon in the core melts and infiltrates into the preform leaving open channels.

In some embodiments, the material used to make the consumable core is pure silicon (>98.8% wt. % Si); in other embodiments, Si based alloys are used, e.g. Si-Al or Si-Ti. If Si based alloys are used the temperatures may need to be adjusted accordingly.

In some embodiments, the material used to make the consumable core has engineered roughness. When such a core is used in a mold in the location where features are desired and a slurry is cast into the mold to form the preform piece, the engineered roughness is replicated in the feature. The roughness will be specified to achieve specific flow characteristics.

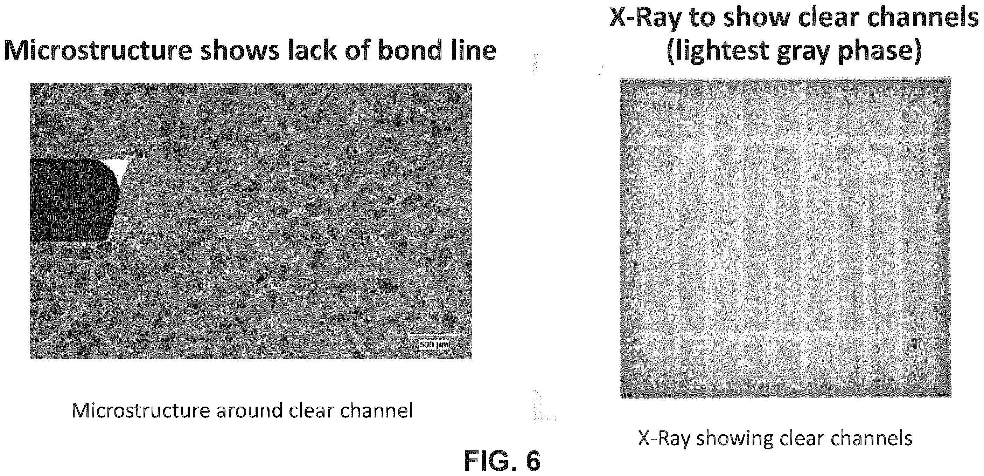

FIG. 6 shows the structure of a reaction bonded silicon carbide (RB-SiC) ceramic component made by the process disclosed herein. X-ray shows the clear channels (Si removed) and the microstructure of the cleared channel is shown as well, indicating the lack of any bond line.

In some embodiments, the amount of the silicon consumable core that is consumed during the process correlates with 25% by weight or below of Si remaining, with a lower limit of 0% Si (none detectable). In other embodiments, 20% by weight or below of Si is remaining; 15% by weight or below of Si is remaining; 10% by weight or below of Si is remaining; 5% by weight or below of Si is remaining; 1% by weight or below of Si is remaining; 0.5% by weight or below of Si is remaining; or 0.1 % by weight or below of Si is remaining. In some embodiments, there is 0-1% detectable silicon present; in other embodiments, there is no detectable silicon present (0% remaining).

The silicon can also be measured in the opposite manner, that is, by the amount of Si that is consumed. In some embodiments, the reduced amounts of Si correlates with 75% by weight or below of Si consumed, with a lower limit of 100% Si consumed (none detectable). In other embodiments, 80% by weight or below of Si is consumed; 85% by weight or below of Si is consumed; 90% by weight or below of Si is consumed; 95% by weight or below of Si is consumed; 99% by weight or below of Si is consumed; 99.5% by weight or below of Si is consumed; or 99.9% by weight or below of Si is consumed. In some embodiments, 99-100% of Si is consumed; in other embodiments, there is no detectable silicon present (100% consumed).

Advantages of using a silicon consumable core can include, for example, (1) Ability to form internally channeled reaction bonded ceramic without a glue bead (advantageous for enhanced flow behavior and ability to form parts with ultra-small channel sizes); (2) Homogenous material properties throughout the part because the typical bond line does not exist; and/or 3) Since it is not a bonded part, the part is intrinsically hermetic.

Applications of this method may be used for ceramics where internal cooling channels or other features are needed. In particular value are applications with small feature sizes or where corrosion with Si would be an issue. Key fields include but are not limited to water-cooled thermal management components; water cooled semiconductor wafer chucks and electrostatic chucks; heat exchangers; petrochem valve bodies; high energy laser mirrors; and/or small orifice nozzles.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "etc.", "e.g.," and "for example" set off lists of one or more non-limiting examples, instances, or illustrations.

Implementations as described herein may relate to the following: A method of producing reaction bonded ceramic components containing internal features. In some embodiments, methods as described herein may utilize a preform containing a silicon consumable core that is melted during processing.

The present application claims priority of U.S. Patent Application No. 18/603,606, filed March 13, 2024. The entire disclosure of this application is hereby explicitly incorporated by reference into the present application.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method of making reaction bonded ceramic components having one or more internal features comprising:
producing a Si consumable core shape representative of the features to be formed;
assembling the mold maintaining the location of the Si consumable core;
casting a preform slurry around the Si consumable core to create a preform piece; and
reaction bonding said preform piece to yield said ceramic components having internal features.

2. The method of claim 1, wherein said internal features are channels.

3. The method of claim 1 or 2, wherein said Si consumable core shape is formed through traditional machining, laser machining, erosive processing, additive processing and/or casting.

4. The method of any one of claims 1 to 3, wherein said Si consumable core is made from pure silicon.

5. The method of any one of claims 1 to 3, wherein said Si consumable core is made from a silicon alloy.

6. The method of any one of claims 1 to 5, wherein said Si consumable core is produced with engineered roughness.

7. The method of any one of claims 1 to 6, wherein a majority of said Si consumable core is consumed.

8. The method of claim 7, wherein 75% or more of said Si consumable core is consumed.

9. The method of claim 8, wherein 85% or more of said Si consumable core is consumed.

10. The method of claim 9, wherein 95% or more of said Si consumable core is consumed.

11. The method of claim 10, wherein there is no detectable silicon present from said Si consumable core after reaction bonding.

12. The method of any one of claims 1 to 11, wherein said one or more internal features contain no remaining silicon.

13. The method of any one of claims 1 to 12, wherein reaction bonding said preform piece comprises applying heat to melt said Si consumable core.

14. The method of claim 13, wherein applying heat occurs under vacuum.

15. The method of any one of claims 1 to 14, wherein said reaction bonded ceramic components comprise silicon carbide (RB-SiC), boron carbide, diamond, pure carbon (as powder or fiber) and/or titanium diboride.

16. The method of claim 15, wherein said reaction bonded ceramic components comprise silicon carbide (RB-SiC).

17. A reaction bonded silicon carbide (RB-SiC) ceramic component made by the method of claim 16.
